# DEMANDE DE BREVET EUROPEEN

(11) **EP 4 528 093 A1**
(43) Date de publication de la demande: **26.03.2025**
(21) Numéro de dépôt: 24198433.5
(22) Date de dépôt: 04.09.2024
(51) Int. Cl.: F02K 1/72

(54) **NACELLE D'AÉRONEF ÉQUIPÉE D'AU MOINS UN DISPOSITIF D'INVERSION DE POUSSÉE COMPRENANT AU MOINS UN DÉFLECTEUR LONGITUDINAL, AÉRONEF COMPRENANT AU MOINS UN ENSEMBLE DE PROPULSION COMPORTANT UNE TELLE NACELLE**

(30) Priorité: 20.09.2023 FR 2309936
(71) Demandeur: AIRBUS OPERATIONS (S.A.S.), 31060 Toulouse (FR)
(72) Inventeur: CHELIN, Frédéric, 31060 TOULOUSE (FR); BOURDEAU, Christophe, 31060 TOULOUSE (FR); SCHOLZ, Olivier, 31060 TOULOUSE (FR)
(74) Mandataire: Fantin, Laurent

(57) **Abrégé**

L'invention a pour objet une nacelle d'aéronef équipée d'un dispositif d'inversion de poussée (62) qui comprend :
- au moins un système de déviation configuré pour dévier, à l'état activé, un flux d'air canalisé dans la nacelle vers une ouverture latérale (64) de la nacelle,
- au moins un système d'orientation (74) comportant :
o au moins un déflecteur transversal (76) configuré pour orienter le flux d'air dévié par le système de déviation (72) selon des directions radiales et vers l'extrémité amont de la nacelle,
o au moins un déflecteur longitudinal (78) sécant avec le (ou les) déflecteur(s) transversal(aux) et orienté selon une direction qui forme un angle inférieur à 25° avec la direction longitudinale.

Le déflecteur longitudinal permet d'améliorer l'efficacité du (ou des) déflecteur(s) transversal(aux).

## Description

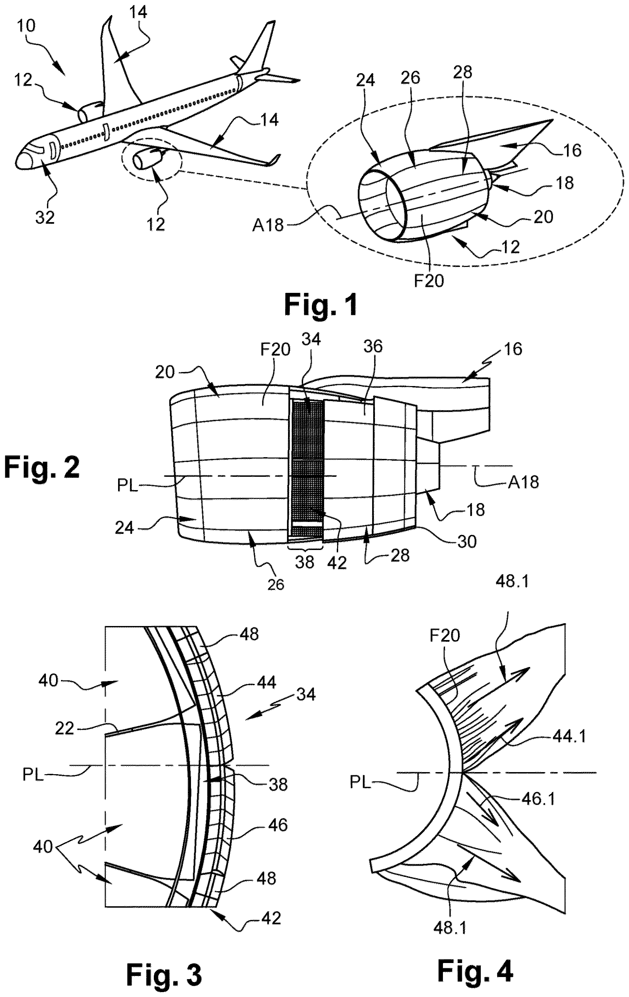

La présente demande se rapporte à une nacelle d'aéronef équipée d'au moins un dispositif d'inversion de poussée comprenant au moins un déflecteur longitudinal ainsi qu'à un aéronef comprenant au moins un ensemble de propulsion d'aéronef comportant une telle nacelle. Selon un mode de réalisation visible sur les figures 1 à 3, un aéronef 10 comprend plusieurs ensembles de propulsion 12 positionnés sous chacune des ailes 14 de l'aéronef 10 et reliés à ces dernières par des mâts 16. Chaque ensemble de propulsion 12 comprend une motorisation 18 positionnée à l'intérieur d'une nacelle 20. La motorisation 18 comprend une soufflante qui présente un axe de rotation A18.

Pour la suite de la description, une direction longitudinale est parallèle à l'axe de rotation A18. Un plan longitudinal est un plan contenant l'axe de rotation A18 et un plan transversal est un plan perpendiculaire à l'axe de rotation A18. Les notions avant/amont et arrière/aval font référence au sens d'écoulement d'un flux d'air dans la nacelle 20, ce dernier s'écoulant de l'avant (l'amont) vers l'arrière (l'aval).

La nacelle 20 a une forme approximativement tubulaire et délimite avec la motorisation 18 un conduit annulaire 22 dans lequel s'écoule un flux d'air secondaire. La nacelle 20 comprend une section amont 24, appelée entrée d'air, une section médiane 26 dans laquelle est positionnée la soufflante de la motorisation 18 et une section aval 28 qui présente un bord de fuite 30.

La nacelle 20 comprend un dispositif d'inversion de poussée 34 positionné au niveau de la section aval 28 et configuré pour occuper un état activé dans lequel il dévie au moins une partie du flux d'air secondaire circulant dans le conduit annulaire 22 vers l'extérieur et l'amont de la nacelle 20 ainsi qu'un état inactivé dans lequel il ne dévie pas le flux d'air secondaire circulant dans le conduit annulaire 22.

Le dispositif d'inversion de poussée 34 comprend au moins une partie mobile 36 permettant de générer au moins une ouverture latérale 38 (visible sur la figure 2) traversant la nacelle 20.

Le dispositif d'inversion de poussée 34 comprend un système de déviation 40 configuré pour occuper une position rétractée, lorsque le dispositif d'inversion de poussée 34 est à l'état inactivé, dans laquelle le système de déviation 40 n'interfère pas avec le flux d'air secondaire ainsi qu'une position déployée (visible sur la figure 3), lorsque le dispositif d'inversion de poussée 34 est à l'état activé, dans laquelle le système de déviation 40 interfère avec le flux d'air secondaire et l'oriente vers l'ouverture latérale 38.

Le dispositif d'inversion de poussée 34 comprend également un système d'orientation 42 configuré pour orienter le flux d'air dévié par le système de déviation 40. Selon un mode de réalisation, le système d'orientation 42 comprend plusieurs grilles d'aubes 44, 46, 48, appelées cascades et positionnées au niveau de chaque ouverture latérale 38, qui comportent chacune des premières parois positionnées dans des plans approximativement longitudinaux ainsi que des deuxièmes parois positionnées dans des plans approximativement transversaux. Les deuxièmes parois présentent une forme d'aube pour dévier vers l'amont le flux d'air sortant via chaque ouverture latérale 38.

Selon un agencement visible sur la figure 3, le système d'orientation 42 comprend, au droit de l'ouverture 38, des première et deuxième grilles d'aubes 44, 46 positionnées de part et d'autre d'un plan longitudinal PL ainsi que des troisièmes grilles d'aubes 48 positionnées de part et d'autre des première et deuxième grilles d'aubes 44, 46.

Comme illustré sur les figures 3 et 4, chaque troisième grille d'aubes 48 est configurée pour orienter le flux d'air 48.1 la traversant selon une direction radiale et vers l'extrémité amont de la nacelle 20. La première grille d'aubes 44, positionnée au-dessus du plan PL, est configurée pour orienter le flux d'air 44.1 la traversant vers l'extrémité amont de la nacelle 20 et le haut par rapport à une direction radiale. La deuxième grille d'aubes 46, positionnée au-dessous du plan PL, est configurée pour orienter le flux d'air 46.1 la traversant vers l'extrémité amont de la nacelle 20 et le bas par rapport à une direction radiale.

Ce mode de réalisation n'est pas satisfaisant car les grilles d'aubes 44, 46, 48 présentent une masse non négligeable.

La présente invention vise à remédier à tout ou partie des inconvénients précités.

A cet effet, l'invention a pour objet une nacelle d'aéronef présentant une surface extérieure s'étendant entre des extrémités amont et aval et configurée pour canaliser un flux d'air s'écoulant selon une direction longitudinale de l'extrémité amont vers l'extrémité aval, la nacelle comportant au moins un dispositif d'inversion de poussée qui comprend :
- au moins une ouverture latérale distante des extrémités amont et aval et traversant la nacelle,
- au moins une partie mobile configurée pour occuper une première position, correspondant à un état inactivé du dispositif d'inversion de poussée, dans laquelle la partie mobile obture l'ouverture latérale ainsi qu'une deuxième position, correspondant à un état activé du dispositif d'inversion de poussée, dans laquelle la partie mobile dégage au moins partiellement l'ouverture latérale,
- au moins un système de déviation configuré pour occuper une position rétractée, lorsque le dispositif d'inversion de poussée est à l'état inactivé, dans laquelle le système de déviation n'interfère pas avec le flux d'air canalisé par la nacelle ainsi qu'une position déployée, lorsque le dispositif d'inversion de poussée est à l'état activé, dans laquelle le système de déviation interfère avec le flux d'air canalisé par la nacelle et l'oriente selon des directions radiales vers l'ouverture latérale,
- au moins un système d'orientation configuré pour orienter le flux d'air dévié par le système de déviation.

Selon l'invention, le système d'orientation comprend :
- au moins un déflecteur transversal positionné approximativement dans un plan perpendiculaire à la direction longitudinale et configuré pour orienter le flux d'air dévié par le système de déviation selon les directions radiales et vers l'extrémité amont de la nacelle,
- au moins un déflecteur longitudinal sécant avec le (ou les) déflecteur(s) transversal(aux) et orienté selon une direction qui forme un angle inférieur à 25° avec la direction longitudinale.

Cette configuration permet de réduire la masse du système d'orientation. La présence d'au moins un déflecteur longitudinal renforce l'efficacité du (ou des) déflecteur(s) transversal(aux).

Selon une autre caractéristique, l'ouverture latérale est délimitée par des bords supérieur et inférieur sensiblement parallèles à la direction longitudinale ainsi que par des bords amont et aval positionnés dans des plans sensiblement transversaux. En complément, chaque déflecteur comprend des première et deuxième extrémités reliées respectivement aux bords amont et aval de l'ouverture latérale ainsi que des bords intérieur et extérieur, le bord intérieur étant plus proche du système de déviation que le bord extérieur.

Selon une autre caractéristique, chaque déflecteur transversal présente des bords intérieur et extérieur, le bord intérieur étant plus proche du système de déviation que le bord extérieur, les bords intérieurs de chaque déflecteur transversal et de chaque déflecteur longitudinal étant sécants et positionnés sur une même surface et/ou les bords extérieurs de chaque déflecteur transversal et de chaque déflecteur longitudinal étant sécants et positionnés sur une même surface.

Selon une autre caractéristique, au moins un déflecteur longitudinal est orienté selon une direction sensiblement parallèle à la direction longitudinale et positionné dans un plan longitudinal.

Selon une autre caractéristique, au moins un déflecteur longitudinal est orienté selon une direction formant un angle compris entre 5 et 10° avec la direction longitudinale.

Selon une autre caractéristique, chaque déflecteur longitudinal présente une hauteur qui diminue de la première extrémité vers la deuxième extrémité.

Selon une autre caractéristique, au moins un déflecteur longitudinal comprend une partie amont, qui s'étend à partir de la première extrémité, au niveau de laquelle la hauteur est constante ainsi qu'une partie aval, qui s'étend de la partie amont jusqu'à la deuxième extrémité, au niveau de laquelle la hauteur diminue progressivement de la partie amont vers la deuxième extrémité.

Selon une autre caractéristique, au moins un déflecteur longitudinal comprend une hauteur qui diminue par palier de la première extrémité vers la deuxième extrémité, la hauteur étant sensiblement constante entre deux déflecteurs transversaux consécutifs.

Selon une autre caractéristique, chaque déflecteur longitudinal se présente sous la forme d'une lame.

Selon une autre caractéristique, le système d'orientation comprend plusieurs déflecteurs longitudinaux positionnés de manière symétrique par rapport à un plan de symétrie.

Selon une autre caractéristique, le système d'orientation comprend un déflecteur longitudinal central, qui présente une section transversale en T ou en V, positionné au niveau du plan de symétrie, des déflecteurs longitudinaux latéraux positionnés de manière symétrique par rapport au plan de symétrie entre le déflecteur longitudinal central et chaque bord supérieur ou inférieur de l'ouverture latérale dont plusieurs déflecteurs longitudinaux latéraux faiblement espacés entre eux, sensiblement parallèles entre eux et plus proches du bord supérieur ou inférieur de l'ouverture latérale que du déflecteur longitudinal central, ainsi qu'un déflecteur longitudinal latéral faiblement espacé du déflecteur longitudinal central. L'invention a également pour objet un aéronef comprenant au moins une nacelle selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une vue en perspective d'un aéronef et d'un ensemble de propulsion illustrant un mode de réalisation,
- La figure 2 est une vue latérale d'un ensemble de propulsion illustrant un mode de réalisation de l'art antérieur,
- La figure 3 est une coupe transversale d'une partie d'un dispositif d'inversion de poussée illustrant un mode de réalisation de l'art antérieur,
- La figure 4 est une représentation schématique du flux d'air sortant du dispositif d'inversion de poussée visible sur la figure 3,
- La figure 5 est une coupe schématique d'un ensemble de propulsion équipé d'un dispositif d'inversion de poussée à l'état inactivé illustrant un mode de réalisation de l'invention,
- La figure 6 est une coupe schématique de l'ensemble de propulsion visible sur la figure 5, le dispositif d'inversion de poussée étant à l'état activé,
- La figure 7 est une vue latérale d'une partie d'un ensemble de propulsion comportant un dispositif d'inversion de poussée à l'état activé illustrant un mode de réalisation de l'invention,
- La figure 8 est une vue en perspective d'une partie d'un système d'orientation de flux d'air d'un dispositif d'inversion de poussée illustrant un mode de réalisation de l'invention,
- La figure 9 est une vue latérale d'un déflecteur longitudinal illustrant un mode de réalisation de l'invention,
- La figure 10 est une vue latérale d'un déflecteur longitudinal illustrant un autre mode de réalisation de l'invention,
- La figure 11 est une coupe transversale d'un déflecteur longitudinal illustrant un premier mode de réalisation de l'invention,
- La figure 12 est une coupe transversale d'un déflecteur longitudinal illustrant un deuxième mode de réalisation de l'invention,
- La figure 13 est une coupe transversale d'un déflecteur longitudinal illustrant un troisième mode de réalisation de l'invention.

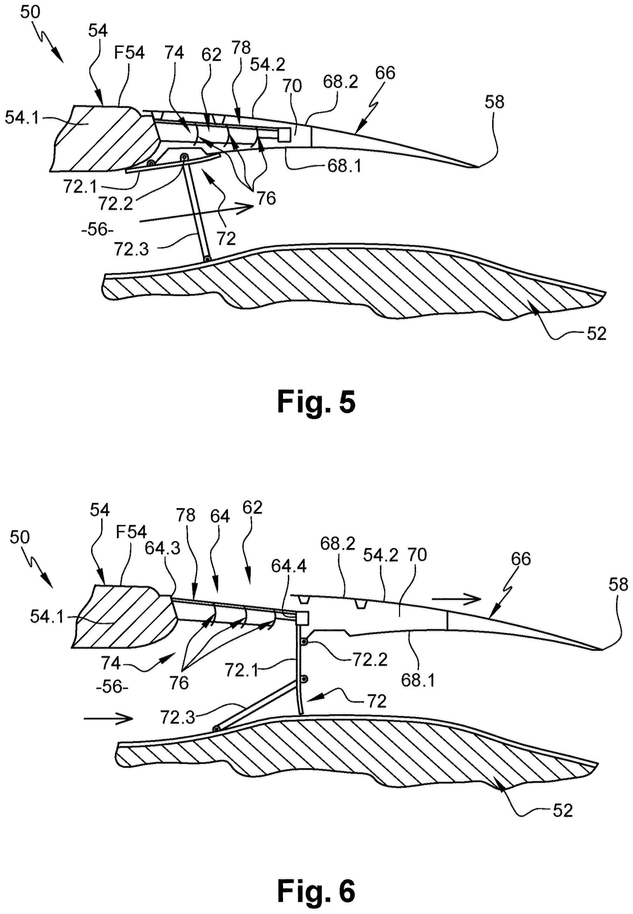

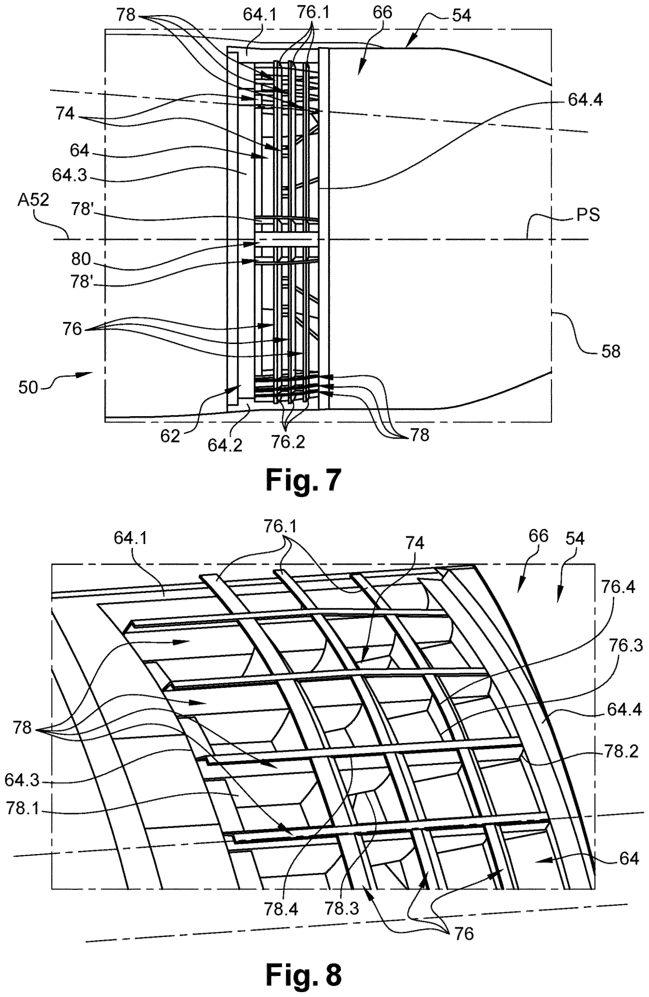

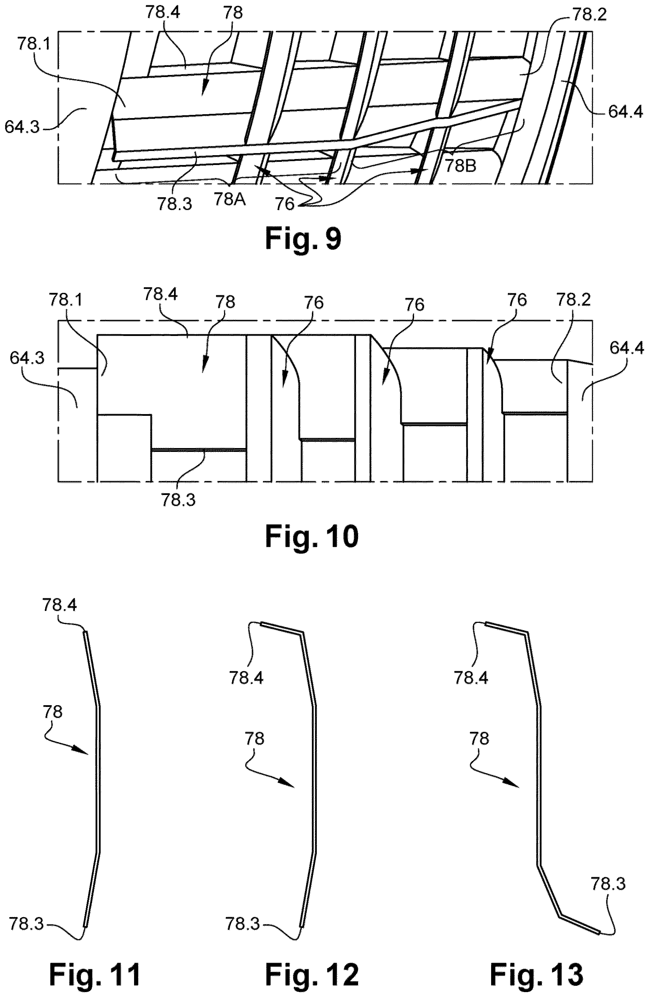

Selon un mode de réalisation visible sur les figures 5 et 6, un ensemble de propulsion 50 comprend une motorisation 52 positionnée à l'intérieur d'une nacelle 54. La motorisation présente un axe de motorisation A52 (visible sur les figures 7 et 10). La nacelle 54 a une forme approximativement tubulaire et délimite avec la motorisation 52 un conduit annulaire 56 dans lequel s'écoule un flux d'air secondaire. La nacelle 54 comprend une partie amont 54.1 et une partie aval 54.2 qui présente un bord de fuite 58. La nacelle 54 présente une surface extérieure F54. Selon un agencement, la nacelle 54 peut comprendre au moins une sonde positionnée au niveau d'une zone de la surface extérieure F54 de la nacelle 54, dans un plan longitudinal de sonde PL.

Selon une application, un aéronef comprend un fuselage, une voilure ainsi qu'au moins un tel ensemble de propulsion relié au fuselage ou à la voilure. Quel que soit le mode de réalisation, la nacelle 54 est tubulaire et s'étend entre des extrémités amont et aval. La nacelle 54 est configurée pour canaliser un flux d'air selon une direction longitudinale, de l'extrémité amont vers l'extrémité aval.

La nacelle 54 comprend au moins un dispositif d'inversion de poussée 62 positionné au niveau de la partie aval 54.2 et configuré pour occuper un état activé (visible sur la figure 6) dans lequel il dévie au moins une partie du flux d'air secondaire circulant dans le conduit annulaire 56 vers l'extérieur et l'extrémité amont de la nacelle 54 ainsi qu'un état inactivé (visible sur la figure 5) dans lequel il ne dévie pas le flux d'air secondaire circulant dans le conduit annulaire 56.

Le dispositif d'inversion de poussée 62 comprend au moins une ouverture latérale 64, traversant la nacelle 54 et distante des extrémités amont et aval de la nacelle 54, configurée pour faire communiquer le conduit annulaire 56 et l'extérieur de la nacelle 54, notamment sa surface extérieure F54, ainsi qu'au moins une partie mobile 66 configurée pour occuper une première position, correspondant à l'état inactivé du dispositif d'inversion de poussée 62 visible sur la figure 5, dans laquelle la partie mobile 66 obture l'ouverture latérale 64 ainsi qu'une deuxième position, correspondant à l'état activé du dispositif d'inversion de poussée 62 visible sur la figure 6, dans laquelle la partie mobile 66 dégage au moins partiellement l'ouverture latérale 64.

Selon un mode de réalisation, la nacelle 54 comprend deux ouvertures latérales 64 sensiblement symétriques par rapport à un plan longitudinal vertical passant par l'axe de motorisation A52. Chaque ouverture latérale 64 est délimitée par des bords supérieur et inférieur 64.1, 64.2 sensiblement parallèles à la direction longitudinale ainsi que par des bords amont et aval 64.3, 64.4 positionnés dans des plans sensiblement transversaux.

Selon une configuration, la partie aval 54.2 est un capot tubulaire en O mobile, formant la partie mobile 66, qui se translate selon la direction longitudinale entre une position fermée (visible sur la figure 5) dans laquelle la partie aval 54.2 est en contact avec la partie amont 54.1, lorsque le dispositif d'inversion de poussée 62 est à l'état inactivé, et une position ouverte (visible sur la figure 6) dans laquelle la partie aval 54.2 est écartée de la partie amont 54.1 de manière à générer la (ou les) ouverture(s) latérale(s) 64 entre les parties amont et aval 54.1, 54.2 lorsque le dispositif d'inversion de poussée 62 est à l'état activé. La partie aval 54.2 comprend une paroi intérieure 68.1 et une paroi extérieure 68.2 reliées au niveau du bord de fuite 58, les parois intérieure et extérieure 68.1, 68.2 délimitant entre elles une cavité 70 ouverte en direction de la partie amont 54.1.

Bien entendu, l'invention n'est pas limitée à cette configuration pour la partie mobile 66.

Le dispositif d'inversion de poussée 62 comprend au moins un système de déviation 72 configuré pour occuper une position rétractée (visible sur la figure 5), lorsque le dispositif d'inversion de poussée 62 est à l'état inactivé, dans laquelle le système de déviation 72 n'interfère pas avec le flux d'air secondaire canalisé dans le conduit annulaire 56 ainsi qu'une position déployée (visible sur la figure 6), lorsque le dispositif d'inversion de poussée 62 est à l'état activé, dans laquelle le système de déviation 72 est déployé dans le conduit annulaire 56, interfère avec le flux d'air secondaire et l'oriente selon des directions radiales (perpendiculaires à la direction longitudinale) vers l'ouverture latérale 64.

Selon un mode de réalisation, pour chaque ouverture latérale 64, le système de déviation 72 comprend au moins un panneau 72.1 ainsi que, pour chaque panneau 72.1, au moins une articulation 72.2 reliant le panneau 72.1 à la nacelle 54 (notamment à la partie mobile 66) et au moins une biellette 72.3 reliant le panneau 72.1 à la motorisation 52. Bien entendu, l'invention n'est pas limitée à ce mode de réalisation pour le système de déviation 72.

Le dispositif d'inversion de poussée 62 comprend également au moins un système d'orientation 74 configuré pour orienter au moins une partie du flux d'air secondaire dévié par le système de déviation 72 et sortant via l'ouverture latérale 64. Selon un agencement, le système d'orientation 74 est positionné au niveau de l'ouverture latérale 64.

Selon un agencement, le système d'orientation 74 et la cavité 70 sont configurés de sorte qu'à l'état inactivé, le système d'orientation 74 se loge dans la cavité 70.

Selon un mode de réalisation, le système d'orientation 74 comprend au moins un déflecteur transversal 76, positionné approximativement dans un plan transversal, comportant une première extrémité 76.1 reliée au bord supérieur 64.1 et une deuxième extrémité 76.2 reliée au bord inférieur 64.2. Chaque déflecteur transversal 76 présente des bords intérieur et extérieur 76.3, 76.4 courbes, sensiblement en arc de cercle, reliant les première et deuxième extrémités 76.1, 76.2, le bord intérieur 76.3 étant plus proche du système de déviation 72 que le bord extérieur 76.4. Selon une configuration, les bords intérieur et extérieur 76.3, 76.4 présentent des courbures adaptées à celles des parois intérieure et extérieure 68.1, 68.2 de la partie aval 54.2 de la nacelle 54 de manière à ce que le système d'orientation 74 puisse se loger dans la cavité 70 lorsque le dispositif d'inversion de poussée 62 est à l'état inactivé. Chaque déflecteur transversal 76 est configuré pour orienter, selon les directions radiales et vers l'extrémité amont, le flux d'air dévié par le système de déviation 72 et sortant de l'ouverture latérale 64.

Selon un mode de réalisation, chaque déflecteur transversal 76 comprend une lame, en forme de portion de couronne, qui présente dans des plans longitudinaux une courbure concave (les bords intérieur et extérieur 76.3, 76.4 étant plus proches de l'extrémité amont de la nacelle 54 que le reste du déflecteur transversal 76).

Selon une configuration, chaque déflecteur transversal 76 a une largeur (distance séparant les bords intérieur et extérieur 76.3, 76.4) et une courbure constantes entre ses première et deuxième extrémités 76.1, 76.2. Ainsi, le flux d'air sortant de la nacelle 54 est sensiblement constant sur le pourtour de la nacelle 54. Selon un agencement, les déflecteurs transversaux 76 ont des largeurs différentes d'un déflecteur transversal à l'autre, qui diminuent du bord amont 64.3 vers le bord aval 64.4.

Le nombre de déflecteurs transversaux 76 et leur forme sont déterminés de manière à obtenir une même fonction aérodynamique que les cascades de l'art antérieur, à savoir un débit suffisant afin d'éviter les problèmes de fonctionnement de la soufflante de la motorisation 52 et une efficacité en matière de contre-poussée.

Pour la suite de la description, on entend par un ou le déflecteur transversal 76 au moins un déflecteur transversal 76 et par un ou le flux d'air au moins un flux d'air.

Selon une caractéristique de l'invention, le système d'orientation 74 comprend au moins un déflecteur longitudinal 78 sécant avec le (ou les) déflecteur(s) transversal(aux) et orienté selon une direction qui forme un angle inférieur à 25° par rapport à la direction longitudinale. Chaque déflecteur longitudinal 78 s'étend entre des première et deuxième extrémités 78.1, 78.2 orientées respectivement vers l'amont et l'aval de la nacelle 54 ainsi qu'entre des bords intérieur et extérieur 78.3, 78.4, le bord intérieur 78.3 étant plus proche du système de déviation 72 que le bord extérieur 78.4.

Selon un agencement, les première et deuxième extrémités 78.1, 78.2 de chaque déflecteur longitudinal 78 sont reliées respectivement aux bords amont et aval 64.3 64.4 de l'ouverture latérale 64.

Selon une configuration, les bords intérieurs 76.3, 78.3 de chaque déflecteur transversal 76 et de chaque déflecteur longitudinal 78 sont sécants et positionnés sur la même surface et/ou les bords extérieurs 76.4, 78.4 de chaque déflecteur transversal 76 et de chaque déflecteur longitudinal 78 sont sécants et positionnés sur la même surface.

Selon un mode de réalisation visible sur la figure 7, le système d'orientation 74 comprend plusieurs déflecteurs longitudinaux 78 positionnés de manière symétrique par rapport à un plan de symétrie PS. Selon un agencement, le plan de symétrie PS est un plan longitudinal horizontal.

Selon un mode de réalisation visible sur la figure 8, au moins un déflecteur longitudinal 78 est orienté selon une direction sensiblement parallèle à la direction longitudinale et positionné dans un plan longitudinal.

Selon un autre mode de réalisation visible sur la figure 7, au moins un déflecteur longitudinal 78 est orienté selon une direction formant un angle compris entre 5 et 10° avec la direction longitudinale.

Selon une configuration, chaque déflecteur longitudinal 78 présente une hauteur (distance entre les bords intérieur et extérieur 78.3, 78.4) constante entre les première et deuxième extrémités 78.1, 78.2.

Selon d'autres configurations visibles sur les figures 9 et 10, chaque déflecteur longitudinal 78 présente une hauteur qui diminue, de manière régulière ou par paliers, de la première extrémité 78.1 vers la deuxième extrémité 78.2.

Selon une configuration visible sur la figure 9, au moins un déflecteur longitudinal 78 comprend une partie amont 78A, qui s'étend à partir de la première extrémité 78.1, au niveau de laquelle la hauteur est constante ainsi qu'une partie aval 78B, qui s'étend de la partie amont 78A jusqu'à la deuxième extrémité 78.2, au niveau de laquelle la hauteur diminue progressivement de la partie amont 78A vers la deuxième extrémité 78.2.

Selon une autre configuration visible sur la figure 10, pour au moins un déflecteur longitudinal 78, sa hauteur diminue par paliers de la première extrémité 78.1 vers la deuxième extrémité 78.2, sa hauteur étant sensiblement constante entre deux déflecteurs transversaux 76 consécutifs.

Selon des modes de réalisation visibles sur les figures 11 à 13, chaque déflecteur longitudinal 78 se présente sous la forme d'une lame. Selon un premier mode de réalisation visible sur la figure 11, cette lame est sensiblement plane. Selon un deuxième mode de réalisation visible sur la figure 12, pour au moins déflecteur longitudinal 78, seul le bord extérieur 78.4 est recourbé. Selon un autre mode de réalisation, pour au moins déflecteur longitudinal 78, seul le bord intérieur 78.3 est recourbé. Selon un troisième mode de réalisation visible sur la figure 13, les bords intérieur et extérieur 78.3, 78.4 sont recourbés. Selon une configuration, les bords intérieur et extérieur 78.3, 78.4 sont recourbés dans le même sens et le déflecteur longitudinal 78 présente une section transversale en C. Selon une autre configuration visible sur la figure 13, les bords intérieur et extérieur 78.3, 78.4 sont recourbés en sens opposés et le déflecteur longitudinal 78 présente une section transversale en Z.

Selon un mode de réalisation visible sur la figure 7, le système d'orientation 74 comprend un déflecteur longitudinal central 80, qui présente une section transversale en T ou en V, positionné au niveau du plan de symétrie PS ainsi que des déflecteurs longitudinaux latéraux 78 positionnés de manière symétrique par rapport au plan de symétrie PS. Selon un agencement, le système d'orientation 74 comprend, entre le déflecteur longitudinal central 80 et chaque bord supérieur ou inférieur 64.1, 64.2 de l'ouverture latérale 64, plusieurs déflecteurs longitudinaux latéraux 78 faiblement espacés entre eux, sensiblement parallèles entre eux et plus proches du bord supérieur ou inférieur 64.1, 64.2 de l'ouverture latérale 64 que du déflecteur longitudinal central 80 ainsi qu'un déflecteur longitudinal latéral 78' faiblement espacé du déflecteur longitudinal central 80.

Quel que soit le mode de réalisation, le système d'orientation 74 comprend au moins un déflecteur longitudinal 78 orienté selon une direction qui forme un angle inférieur à 25° avec la direction longitudinale. Ce déflecteur longitudinal 78 est configuré pour orienter le flux d'air dévié par le système de déviation 72 selon au moins une direction qui forme un angle avec une direction radiale. Ainsi, même si les déflecteurs transversaux 76 orientent le flux d'air dévié par le système de déviation 72 de manière sensiblement constante sur le pourtour de la nacelle 54, chaque déflecteur longitudinal 78 permet d'orienter le flux d'air dévié par le système de déviation 72 selon une direction donnée dans un plan transversal. Ainsi, la présence d'au moins un déflecteur longitudinal 78, 80 améliore l'efficacité du (ou des) déflecteur(s) transversal(aux) 76.

Selon un mode de réalisation, le système d'orientation 74 comprend au moins une zone qui s'étend sur un secteur angulaire d'au moins 20° dans un plan transversal, dépourvue de déflecteurs longitudinaux 78. Ainsi, dans cette zone, deux déflecteurs longitudinaux 78 consécutifs sont espacés d'un angle d'au moins 20° dans un plan transversal.

Les déflecteurs longitudinaux 78 sont espacés entre eux d'un pas qui peut varier sur la circonférence de la nacelle. Les déflecteurs longitudinaux 78 sont plus proches et sont espacés d'un faible secteur angulaire de l'ordre de 5 à 20° dans des zones de l'ouverture latérale 64 faisant face à un obstacle comme le sol ou le fuselage et espacés d'un secteur angulaire supérieur à 30° en dehors de ces zones.

## Revendications

1. Nacelle (54) d'aéronef présentant une surface extérieure (F54), s'étendant entre des extrémités amont et aval, configurée pour canaliser un flux d'air s'écoulant selon une direction longitudinale de l'extrémité amont vers l'extrémité aval, la nacelle comportant au moins un dispositif d'inversion de poussée (62) qui comprend :
- au moins une ouverture latérale (64) distante des extrémités amont et aval et traversant la nacelle,
- au moins une partie mobile (66) configurée pour occuper une première position, correspondant à un état inactivé du dispositif d'inversion de poussée, dans laquelle la partie mobile (66) obture l'ouverture latérale (64) ainsi qu'une deuxième position, correspondant à un état activé du dispositif d'inversion de poussée (62), dans laquelle la partie mobile (66) dégage au moins partiellement l'ouverture latérale (64),
- au moins un système de déviation (72) configuré pour occuper une première position, lorsque le dispositif d'inversion de poussée (62) est à l'état inactivé, dans laquelle le système de déviation (72) n'interfère pas avec le flux d'air canalisé dans la nacelle (54) ainsi qu'une deuxième position, lorsque le dispositif d'inversion de poussée (62) est à l'état activé, dans laquelle le système de déviation (72) interfère avec le flux d'air canalisé dans la nacelle (54) et l'oriente selon des directions radiales vers l'ouverture latérale (64),
- au moins un système d'orientation (74) configuré pour orienter le flux d'air dévié par le système de déviation (72),
**caractérisée en ce que** le système d'orientation (74) comprend :
- au moins un déflecteur transversal (76) positionné approximativement dans un plan perpendiculaire à la direction longitudinale et configuré pour orienter le flux d'air dévié par le système de déviation (72) selon les directions radiales et vers l'extrémité amont de la nacelle,
- au moins un déflecteur longitudinal (78, 78', 80) sécant avec le (ou les) déflecteur(s) transversal(aux) et orienté selon une direction qui forme un angle inférieur à 25° avec la direction longitudinale.

2. Nacelle d'aéronef selon la revendication précédente, **caractérisée en ce que** l'ouverture latérale (64) est délimitée par des bords supérieur et inférieur (64.1, 64.2) sensiblement parallèles à la direction longitudinale ainsi que par des bords amont et aval (64.3, 64.4) positionnés dans des plans sensiblement transversaux et **en ce que** chaque déflecteur (78) comprend des première et deuxième extrémités (78.1, 78.2) reliées respectivement aux bords amont et aval (64.3 64.4) de l'ouverture latérale (64) ainsi que des bords intérieur et extérieur (78.3, 78.4), le bord intérieur (78.3) étant plus proche du système de déviation (72) que le bord extérieur (78.4).

3. Nacelle d'aéronef selon la revendication précédente, **caractérisée en ce que** chaque déflecteur transversal (76) présente des bords intérieur et extérieur (76.3, 76.4), le bord intérieur (76.3) étant plus proche du système de déviation (72) que le bord extérieur (76.4), les bords intérieurs (76.3, 78.3) de chaque déflecteur transversal (76) et de chaque déflecteur longitudinal (78) étant sécants et positionnés sur une même surface et/ou les bords extérieurs (76.4, 78.4) de chaque déflecteur transversal (76) et de chaque déflecteur longitudinal (78) étant sécants et positionnés sur une même surface.

4. Nacelle d'aéronef selon l'une des revendications 1 à 3, **caractérisée en ce qu'**au moins un déflecteur longitudinal (78) est orienté selon une direction sensiblement parallèle à la direction longitudinale et positionné dans un plan longitudinal.

5. Nacelle d'aéronef selon l'une des revendications 1 à 3, **caractérisée en ce qu'**au moins un déflecteur longitudinal (78) est orienté selon une direction formant un angle compris entre 5 et 10° avec la direction longitudinale.

6. Nacelle d'aéronef selon l'une des revendications 2 à 5, **caractérisée en ce que** chaque déflecteur longitudinal (78) présente une hauteur qui diminue de la première extrémité (78.1) vers la deuxième extrémité (78.2).

7. Nacelle d'aéronef selon la revendication précédente, **caractérisée en ce qu'**au moins un déflecteur longitudinal (78) comprend une partie amont (78A), qui s'étend à partir de la première extrémité (78.1), au niveau de laquelle la hauteur est constante ainsi qu'une partie aval (78B), qui s'étend de la partie amont (78A) jusqu'à la deuxième extrémité (78.2), au niveau de laquelle la hauteur diminue progressivement de la partie amont (78A) vers la deuxième extrémité (78.2).

8. Nacelle d'aéronef selon la revendication 6, **caractérisée en ce qu'**au moins un déflecteur longitudinal (78) comprend une hauteur qui diminue par paliers de la première extrémité (78.1) vers la deuxième extrémité (78.2), la hauteur étant sensiblement constante entre deux déflecteurs transversaux (76) consécutifs.

9. Nacelle d'aéronef selon l'une des revendications précédentes, **caractérisée en ce que** chaque déflecteur longitudinal (78) se présente sous la forme d'une lame.

10. Nacelle d'aéronef selon l'une des revendications précédentes, **caractérisée en ce que** le système d'orientation (74) comprend plusieurs déflecteurs longitudinaux (78) positionnés de manière symétrique par rapport à un plan de symétrie (PS).

11. Nacelle d'aéronef selon la revendication précédente, **caractérisée en ce que** le système d'orientation (74) comprend un déflecteur longitudinal central (80), qui présente une section transversale en T ou en V, positionné au niveau du plan de symétrie (PS), des déflecteurs longitudinaux latéraux (78) positionnés de manière symétrique par rapport au plan de symétrie (PS), entre le déflecteur longitudinal central (80) et chaque bord supérieur ou inférieur (64.1, 64.2) de l'ouverture latérale (64) dont plusieurs déflecteurs longitudinaux latéraux (78) faiblement espacés entre eux, sensiblement parallèles entre eux et plus proches du bord supérieur ou inférieur (64.1, 64.2) de l'ouverture latérale (64) que du déflecteur longitudinal central (80) ainsi qu'un déflecteur longitudinal latéral (78') faiblement espacé du déflecteur longitudinal central (80).

12. Aéronef comprenant au moins une nacelle selon l'une des revendications précédentes.
